# EUROPEAN PATENT SPECIFICATION

(11) **EP 0 288 991 B1**
(45) Date of publication and mention of the grant of the patent: **08.02.1995**
(21) Application number: 88106734.2
(22) Date of filing: 27.04.1988
(51) Int. Cl.: B23K 9/09

(54) **Consumable electrode arc welding machine**
Lichtbogenschweissmaschine mit abschmelzender Elektrode
Machine de soudage à l'arc avec électrode consommable

(30) Priority: 28.04.1987 JP 105146/87; 21.05.1987 JP 124205/87
(43) Date of publication of application: 02.11.1988
(73) Proprietor: MATSUSHITA ELECTRIC INDUSTRIAL CO., LTD., Kadoma-shi, Osaka-fu, 571 (JP)
(72) Inventor: Kawai, Naoki, Ikeda-shi (JP); Hamamoto, Kouji, Takarazuka-shi (JP); Hosokawa, Tomiaki, Takarazuka-shi (JP)
(74) Representative: Patentanwälte Leinweber & Zimmermann

(56) References cited:
- EP-A- 0 170 248
- DE-A- 3 220 590
- US-A- 4 717 807
- PATENT ABSTRACTS OF JAPAN vol.11,no.123(M-581)(2570),17 April 1987;
- WELDING JOURNAL vol.66,no.3,March 1987,pages 57-63,Miami,FL,US; T.OGASAWARA et al.:" A power Source for Gas Shielded Arc Welding with New Current Waveforms"

## Description

### BACKGROUND OF THE INVENTION

### FIELD OF THE INVENTION

The present invention relates to a consumable electrode arc welding machine, and more particularly to an arc welding machine in which a welding wire making up a consumable electrode is automatically fed to a base member and wire droplets are transferred to the base member making up welded member constituting an object of welding with a reduced amount of spatter at the time of welding operation.

### DESCRIPTION OF THE PRIOR ART

The conventional pulse MIG welding process, in which the wire molten metal is positively reduced to spray state to transfer to the base metal by being supplied with a pulse current, has various characteristics different from what is called the ordinary MIG welding process using a constant DC current. One of the great differences between the characteristics of these two welding processes is that when the welding output is a low current, the welding operation is performed by repeating the shorting and arcs alternately in the MIG welding process, while the wire molten metal can be transferred to the base metal in the form of spray in the pulse MIG welding process. Transfer in spray form has a distinct feature as compared with the welding by shorting transfer in the generation of spatter. Namely, the welding by spray transfer causes much less spatter than ordinary welding by shorting transfer. This is one of the great advantages of the pulse MIG welding process. In the pulse MIG welding process, however, if the arc voltage is set to a low level and the arc length is set to shorten, a shorting is liable to occur between the electrode wire and the base metal. However, in the process, an excessively low voltage setting causes an increased number of shortings, often undesirably leading to as much spatter as the ordinary MIG welding process.

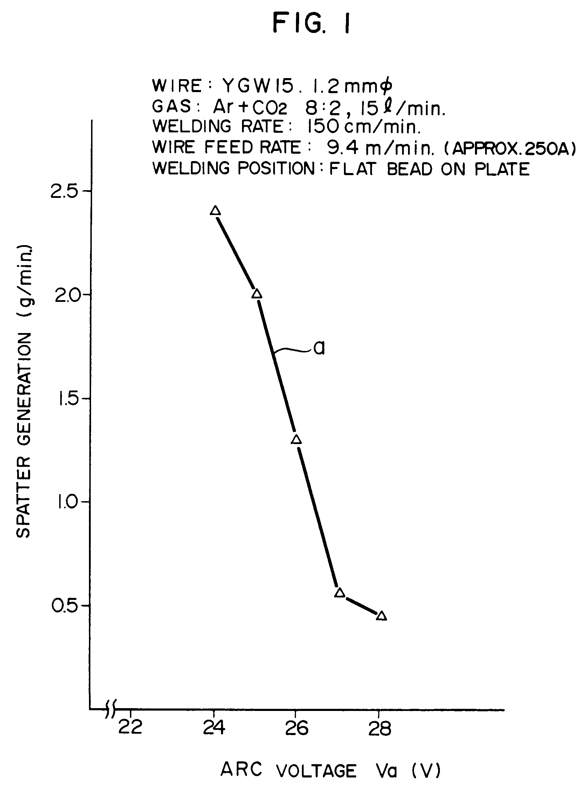

Fig. 1 is a graph showing the amount of spatter generation plotted against the arc voltage as measured with a conventional pulse MIG welding machine. As shown in Fig. 1, the sharp increase in spatter generation with the decrease in arc voltage is by reason of the fact that the pulse current is supplied in timings set within the welding machine regardless of whether the wire is shorted in contact with the base metal or the arc is generated out of contact therewith, that is, regardless of the condition of the weld zone in this respect. This point will be explained more in detail below.

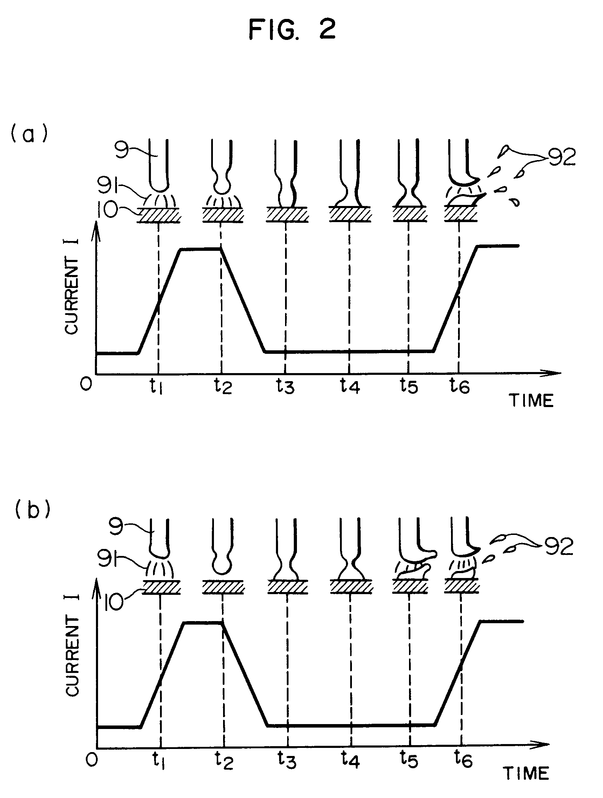

In the conventional pulse MIG welding machine, as described above, a pulse current is supplied in timings set within the welding machine regardless of the conditions of the weld zone, and therefore, more spatters are generated by shorting transfer when the arc voltage is set to a low level, that is, when the forward end of the welding wire is in contact with the base metal thereby increasing the chance of the molten globule at the forward end of the wire transferring to the base metal by pinch effect due to the contact shorting current or the surface tension of the molten metal but not when the forward end of the welding wire is out of contact with the base metal and all the molten metal globules at the forward end of the wire transfer to the base metal in spray form in what is called the spray transfer. The arc voltage is set to a low level in order to prevent such a welding defect as undercut with an increased welding rate. With the decrease in welding voltage, however, a great amount of spatter is generated, thereby adversely affecting the advantage of the otherwise small-spatter pulse MIG welding method. Especially, spatter generation is further promoted by application of the pulse current without regard to the conditions of the weld zone. This fact will be explained with reference to Fig. 2.

Figs. 2a and 2b show a change in welding current waveform with time against the droplet transfer to the weld zone with time in a conventional pulse MIG welding machine with an arc voltage set to such a low level where shorting transfer occurs occasionally. In Fig. 2, reference numeral 9 designates a welding wire, numeral 10 a base metal, numeral 91 a welding arc, and numeral 92 spatter. Fig. 2a represents a case in which the next pulse current is supplied with the welding wire 9 in shorting contact with the base metal. In this case, the molten metal is released from shorting with the dispersion of the spatter 92 at time point t₆ under a strong pinch effect of the pulse current. In the case of Fig. 2b where the shorting is eliminated at a time point t₅ immediately before the next application of pulse current, on the other hand, the next pulse current is applied before the molten part of the forward end of the welding wire and the molten metal that has transferred are put into needle form, and therefore the pulse current causes considerable spatters 92 at time point t₆.

The foregoing is the description of the prior art relating to the pulse MIG welding process and the reason why spatter increases when the arc voltage is set to a low level in conventional pulse MIG welding machines.

With a view to attacking the problem that a spatter increases heavily when the arc voltage is set to a low level in conventional pulse MIG welding machines, there has been proposed a prior art method such as disclosed by U.S.P. 4,697,062, for example.

The essential point of the invention of this prior art reference for coping with the problem of heavy spatter generation at the time of a low arc voltage operator of a conventional pulse MIG welding machine resides in that, when a short-circuiting condition is present between the electrode wire and the base metal at the rise time of a pulsating welding current, the rise of the pulse current is initiated upon regeneration of an arc after the short-circuiting condition has been terminated from some cause, and this invention is featured in the fact that the application of a next pulse current is deferred until the short-circuiting condition between the electrode wire and the base metal is terminated.

The pulse arc welding machine of this prior art reference may have some degree of functional effect before a certain low arc voltage value is reached. However, when the arc voltage value is further reduced, the short-circuiting condition between the electrode wire and the base metal cannot be terminated for ever. As a result, the application of a next pulse current is caused to stop, which, at last, gives rise to an electrode wire failure such as stubbing. In order to prevent such an undesirable condition from occurring, claim 5 of this prior art reference recites that inhibiting means operating to inhibit application of a subsequent pulse current, when the welding (electrode) wire and the base metal are mutually in the short-circuited condition, does not perform its inhibiting operation for more than a predetermined maximum inhibition period. Thus, the invention of this prior art reference intends to make the prevention of occurrence of a welding failure take precedence over the prevention of generation of a spatter. As described above, the prior art has been on a level which is limited in the technique of reducing the generation of a spatter in the pulse MIG welding machines.

### SUMMARY OF THE INVENTION

The object of the present invention is to obviate the problems of conventional pulse MIG welding machines, and to provide an arc welding machine accompanied by less spatter even under a low arc voltage setting with an increased welding rate involving occasional shorting transfers.

According to the present invention, there is provided an arc welding machine characterized in that if the contact shorting lasts not more than a predetermined first time limit, the pulse current output is alternated with the base current in a basic pulse period, and if the contact shorting lasts beyond the first time limit, the welding output pulse current during the subsequent contact shorting process is subjected to a constant-current control along a predetermined first trace with a speed not higher than the rise of the pulse current. Further, if an arc is regenerated after the contact shorting beyond the first time limit, a second time limit starts to be counted from the starting point of arc regeneration, while at the same time effecting a third welding output control different from the pulse current or base current within the second time limit, after which the operation within the basic pulse period is restored. For this purpose, the arc welding machine according to the present invention comprises an arc/shorting decision circuit for deciding whether a welding wire making up a consumable electrode is shorted in contact with a base metal for welding or generates an arc out of contact with the base metal and producing an arc shorting decision signal, a dip pulse control circuit supplied with the arc shorting decision signal as one input thereto for designating a pulse arc welding waveform to produce the pulse current and the base current by time division within the third time limit making up the basic pulse period for spray transfer of the welding wire in the case where the contact shorting occurs within the predetermined first time limit and designating a shorting transfer welding waveform to effect the shorting transfer of the welding wire from the end of the first time limit in the case where the contact shorting occurs beyond the first time limit, the dip pulse control circuit producing, after arc generation upon termination of the contact shorting, a waveform switching signal continuing to designate the shorting transfer welding waveform until the lapse of the second time and a pulse sync signal designating a starting time of application of a pulse current for pulse arc welding, a pulse waveform circuit supplied with the pulse sync signal as one input thereto for producing a pulse control signal time-divided by the pulse current and the base current within the third time limit, a dip waveform circuit supplied with the arc-shorting decision signal as one input thereto for producing a dip control signal designating a constant-current welding output along a predetermined first trace not higher in speed than the rise of the pulse current during the contact shorting and designating a third welding output control different both from the base current and the pulse current during arc generation after arc reproduction, and switching means supplied with the waveform switching signal for applying the pulse control signal or the dip control signal selectively to a drive circuit for driving welding output control means.

### BRIEF DESCRIPTION OF THE DRAWINGS

Fig. 1 is a diagram showing the amount of spatter generated as against an arc voltage in conventional pulse MIG welding machines.

Fig. 2 is a diagram showing chronological changes in the welding current waveform as against the conditions of molten droplets in conventional pulse MIG welding machine.

Fig. 3 shows a block diagram of an arc welding machine configured according to the present invention.

Fig. 4 is a time chart of signals produced by the essential parts of the invention included in Fig. 3.

Fig. 5 is a diagram specifically showing a dip pulse control circuit of an arc welding machine according to the present invention.

Fig. 6 is a diagram showing an operational truth value of the flip-flop IC shown in Fig. 5.

Fig. 7 is a time chart for signals produced by the essential parts included in Fig. 5.

Fig. 8 is a diagram showing the data on spatter generation according to the invention incorporated into the data on conventional arc welding machines.

Fig. 9 is a diagram showing chronological changes in welding output waveform and droplet transfer in conventional shorting transfer welding machines.

### DESCRIPTION OF THE PREFERRED EMBODIMENTS

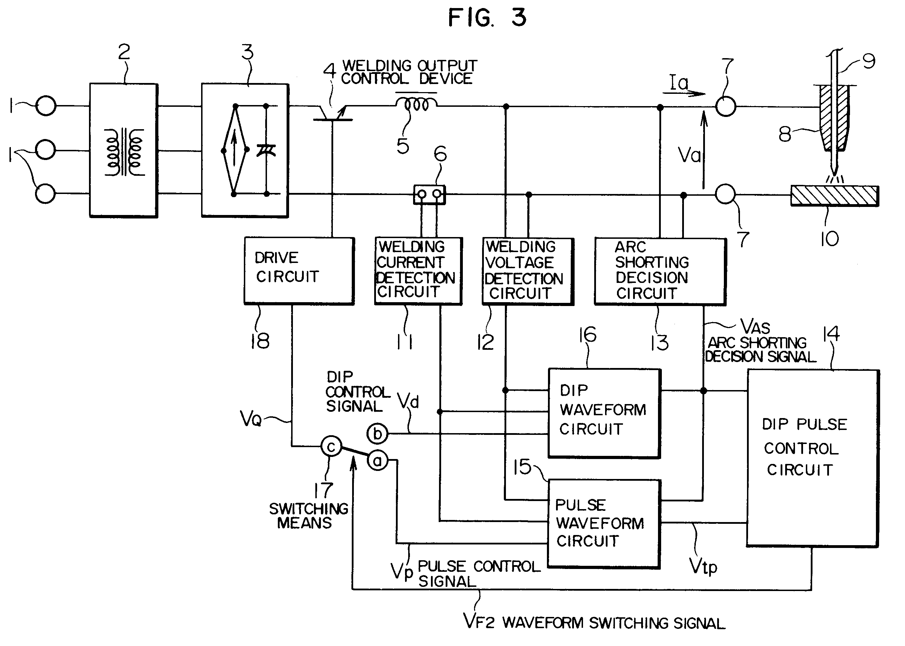

In Fig. 3, reference numeral 1 designates an input terminal of an arc welding machine, numeral 2 a transformer, numeral 3 a rectification-smoothing circuit, numeral 4 a welding output control means, numeral 5 a reactor, numeral 6 a current-divider, numeral 7 an output terminal, numeral 8 an energizing contact chip, numeral 9 a welding wire, numeral 10 a base metal, numeral 11 a welding current detection circuit, and numeral 12 a welding voltage detection circuit.

Numeral 13 designates an arc-shorting decision circuit for producing an arc-shorting decision signal V_{AS}. Numeral 14 designates a dip pulse control circuit for producing a pulse sync signal Vₜₚ and a waveform switching signal V_{F2}.

Numeral 15 designates a pulse waveform circuit for producing a pulse control signal Vₚ. Numeral 16 designates a dip waveform circuit for producing a dip control signal V_{d}. Numeral 17 designates a switching means for selecting and producing the pulse control signal Vₚ or the dip control signal V_{d} as a drive signal V_{Q} depending on the "high" or "low" state of the waveform switching signal. Numeral 18 designates a drive circuit for driving the welding output control means 4 in response to the drive signal V_{Q}. In Fig. 3, reference character Iₐ designates a welding current and character Vₐ a welding voltage.

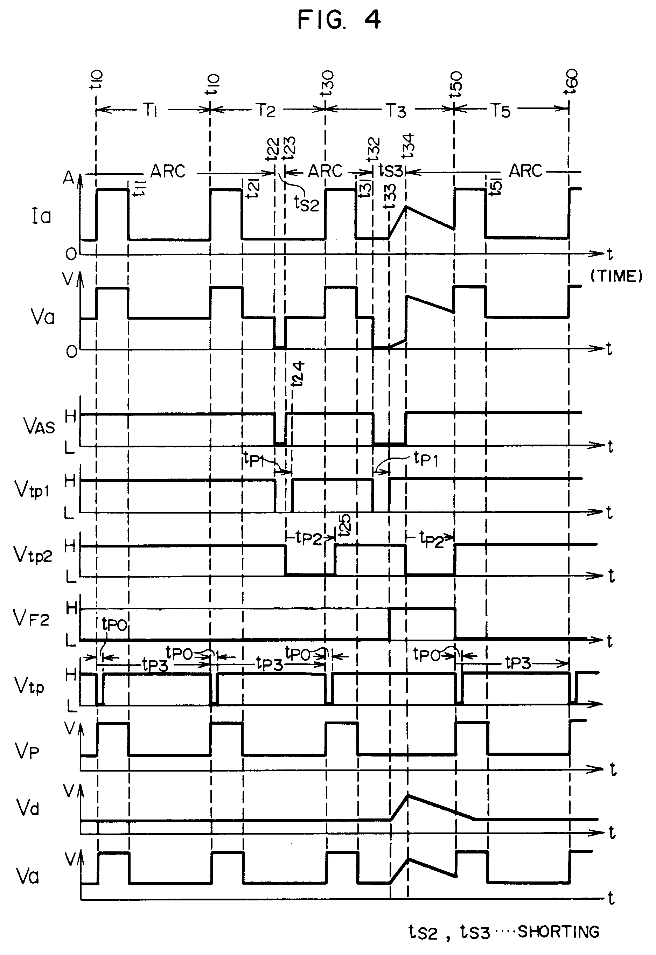

Fig. 4 is a time chart showing a chronological change in each signal and output shown in Fig. 1, and the symbols in headings of the waveforms in Fig. 4 correspond to the signals and outputs of the same symbols respectively shown in Fig. 3.

The period T₁ in Fig. 4 is the one during which the contact shorting does not occur within the third time limit, when the arc-shorting decision circuit 13 continues to produce a "high" arc-shorting decision signal V_{AS} indicating the arc generation. As a result, the dip pulse control circuit 14 produces the waveform switching signal V_{F2} kept at "low" level indicating the pulse welding mode, while at the same time producing the pulse sync signal Vₜₚ designating the start of pulse current application thereby to count the third time limit making up a basic pulse period. The pulse waveform circuit 15 determines a pulse current value, a base current value and the time ratio between the pulse current value and the base current value within the third time limit in response to the rise of the pulse sync signal thereby to produce the pulse control signal Vₚ. The switching means 17 selects the pulse control signal Vₚ as a drive signal V_{Q} and applies it to the drive circuit 18 in view of the fact that the waveform switching signal V_{F2} designates a pulse welding mode. As a result, the welding output control means 4 controls the welding current Iₐ in such a manner as to follow the trace of the pulse control signal Vₚ.

The time T₂ in Fig. 4 is a period during which a minor contact shorting occurs at a time point t₂₂ in the base current period and is naturally terminated regenerating an arc under a vibration of the weld zone or the like at a time point t₂₃ before complete counting of the first time limit tₚ₁. In this case, since the contact shorting period t_{S2} is shorter than the first time limit tₚ₁, the dip pulse control circuit 14 functions to keep the waveform switching signal V_{F2} at a "low" level designating the pulse welding mode. At the same time, the pulse sync signal Vtp counts the third time limit tₚ₃ making up the basic pulse period and shifts to the next period T₃. As a result, subsequent operations become similar to those for the period T₁.

During the period T₃ shown in Fig. 4, on the other hand, the contact shorting occurs at time point t₃₂ and is not terminated even at a time point t₃₃ upon the lapse of the first time limit tₚ₁, until the time point t₃₄ when the contact shorting is terminated to generate an arc by application thereto of a shorting current along the first trace, followed by the second time limit tₚ₂ lacking the contact shorting during the arc generation. In this case, the dip pulse control circuit 14 functions to suspend the counting of the third time limit tₚ₃ at the time point t₃₃ upon lapse of the first time limit tₚ₁ and is prepared for counting the third time limit tₚ₃, while at the same time switching the waveform switching signal V_{F2} from "low" to "high" level designating the shift from the pulse welding mode to the shorting transfer welding (dip welding) mode. The switching means 17 thus selects the dip control signal V_{d} and applies it to the drive circuit 18, while the welding output control means 4 controls the welding output along the first trace for the contact shorting prepared in the dip waveform circuit 16. After arc regeneration, the third welding output control prevails during the second time limit tₚ₂, with the result that the welding current Iₐ during the period from time t₃₃ to t₅₀ is different from the pulse current or the base current. At the time point t₅₀ when the counting of the second time limit tₚ₂ is completed, the dip pulse control circuit 14 functions to start counting the third time limit tₚ₃ and keeps the pulse sync signal Vₜₚ at a "low" level for predetermined time limit tₚ₀, and at the same time switches the waveform switching signal V_{F2} from "high" to "low" level, thereby designating the restoration from the shorting transfer welding mode to the pulse welding mode by an output thereof.

As a consequence of these processes of operation, a molten globule for transfer of the next droplet is formed at the forward end of wire by the third welding output control during the second time limit after termination of contact shorting, and released as a droplet in spray from the wire by the next pulse current applied from the time point t₅₀ thereby to continue a smooth pulse arc welding operation with a drop for each pulse.

The third welding output control described above according to the present invention refers to a case of a control in which the V_{d} signal decreases with time during the period tₚ₂ in Fig. 4. The result is, however, not necessarily the actual welding output being subjected to a constant-current control, but the output depends on the impedance of the welding arc. Actually, therefore, a substantially constant-voltage characteristic is obtained. This control method generally finds applications in conventional arc welding machines of shorting transfer type, and circuit examples for realizing such a control method will not be described.

In other words, the third welding output control as referred to in the present invention is intended to be defined as a control output different from both the pulse current and base current. An explanation has been made above about Figs. 3 and 4.

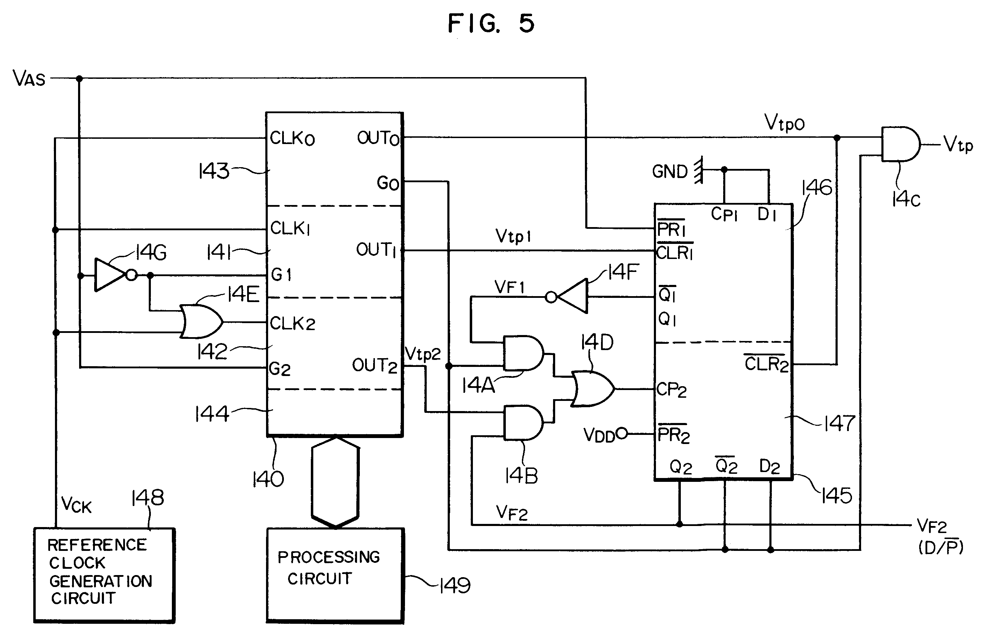

Now, a specific configuration of the dip pulse control circuit 14 in Fig. 3 is shown in Fig. 5. In Fig. 5, numeral 140 designates a programmable interval timer IC that is a general-purpose 8253 IC including a single IC containing a first timer circuit 141, a second timer circuit 142 and a third timer circuit 143 independent of each other. The operation mode and the count of the timer circuits are set by control means 144. Numeral 145 designates an IC making up a general-purpose 7474 IC having built therein two D-type flip-flop circuits with clear preset function including a first flip-flop circuit 146 and a second flip-flop circuit 147 independent of each other. Numeral 148 designates a reference clock signal generation circuit for producing a reference clock signal of "high" and "low" levels at predetermined time intervals. Numeral 149 designates a processing circuit for applying the operation mode and the count of each of the timers to the programmable interval timer IC 140 in accordance with the condition of the welding work. Numerals 14A, 14B, 14C designate AND elements, numerals 14D, 14E OR elements, and numerals 14F, 14G logic inverters.

The timers in the circuit of Fig. 5 are controlled by the processing circuit 149 and the control means 144 in such a manner that when the terminal input G₁ shifts from "low" to "high" level, the first timer circuit 141 begins to count the first time limit by the number of times of shifts from "high" to "low" level of the signal supplied from the terminal CLK₁, thereby performing the operation of a restartable one-shot timer producing a "low" signal Vₜₚ₁ while counting the first time limit and a "high" signal Vₜₚ₁ during the remaining time from the terminal OUT₁. The second timer circuit 142, like the first timer circuit 141, performs the oneshot timer function. The second timer circuit used in this circuit, however, does not stop counting even when the G₂ input is reduced to "low" level during counting, and therefore the OR element 14E is used to keep the CLK₂ input signal at "high" level not to proceed with the counting thereby to keep the OUT₂ output at "low" level during the contact shorting period as during the counting. This circuit has thus a function to interrupt the counting and is adapted to restart counting upon generation of the next arc. When the G₀ input is "high", the third timer circuit 143 counts the number of times the signal from the CLK₀ switches from "high" to "low" level, and when this number reaches a predetermined level, reduces the OUT₀ output to "low" level for a predetermined length of time tₚₒ while keeping it at "high" level during the remaining period as a frequency-dividing operation. When the G₀ input is reduced to "low" level, the frequency-dividing operation is interrupted with the OUT₀ output kept at "high" level, and with the restoration of the next G₀ input to "high" level, a new frequency-dividing operation is performed.

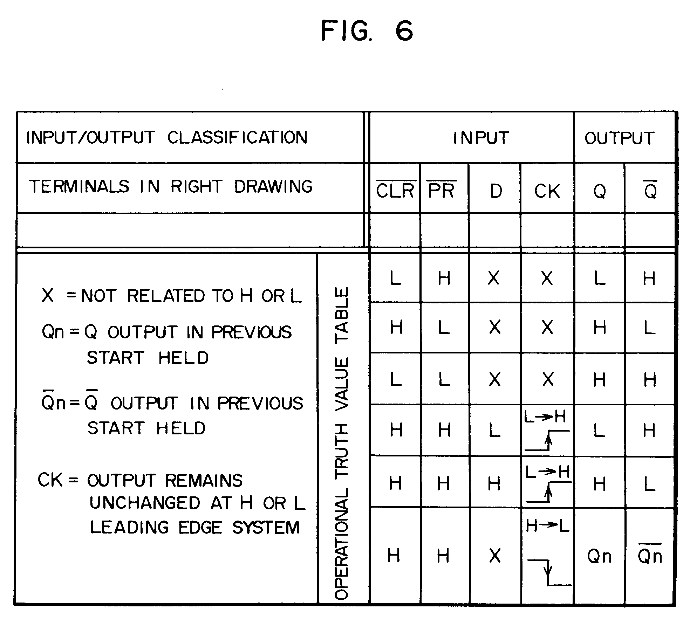

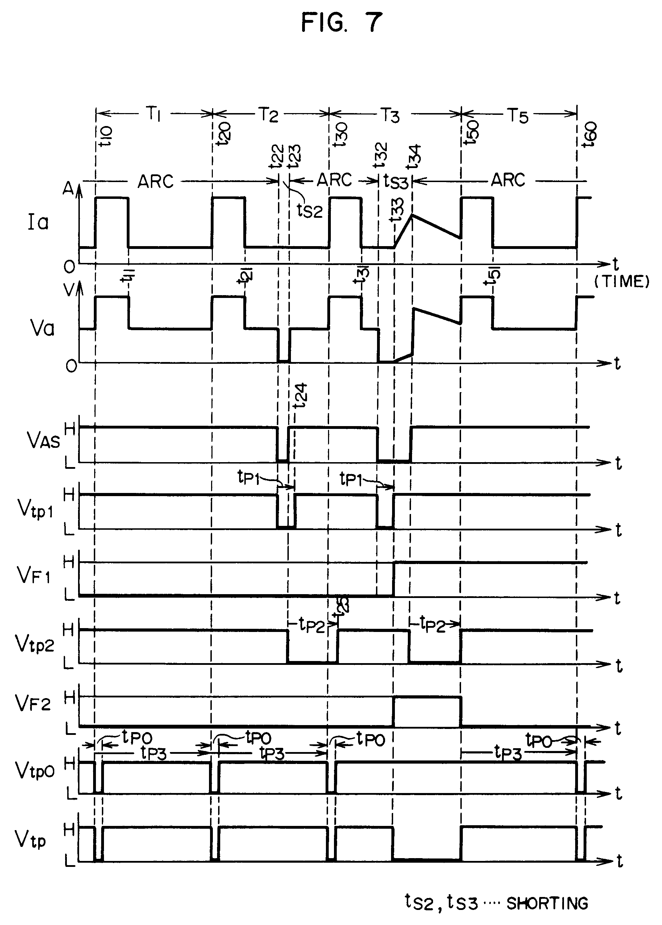

The first flip-flop circuit 146 and the second flip-flop circuit 147 in the flip-flop IC 147 operate in accordance with the diagram of Fig. 6 showing truth values. The first flip-flop 146, in particular, in which the CP₁ input and D₁ input are kept at "low" level, acts as set priority R-S flip-flop with the CLR₁ as a set input and PR₁ as a reset input. Also, the second flip-flop circuit 147 functions as an R-S flip-flop of edge trigger type with signal V_{F1} as a set input and Vₜₚ₂ as a reset input by connecting AND elements 14A, 14B and an OR element 14D in the manner shown. Signals produced at various parts of the circuit of Fig. 5 take the form as shown in Fig. 7 with the same condition changes as in Fig. 4, and thus produces an effect similar to those in Fig. 4.

Although the waveform tₚ in Fig. 7 is different from the waveform tₚ in Fig. 4, the circuit of Fig. 5 has a function substantially equivalent to that of Fig. 4 in that a one-shot pulse generation circuit utilizing the leading edge of the waveform tp is inserted before the signal Vₜₚ in Fig. 5 and the output signal of the one-shot pulse generation circuit thus inserted is used as a signal Vₜₚ in Figs. 3 and 4 and in that the time limit tₚₒ in Fig. 7 is determined as a very small value that can be ignored on the drawing. The reference clock generation circuit 148 in Fig. 5, which is easily realizable by use of a CR oscillation circuit or a crystal transducer, will not be described any more. Further, the processing circuit 149 includes a microcomputer configured for general purposes to set the operation mode or count of each of the first timer circuit 141, the second timer circuit 142 and the third timer circuit 143 of the programmable interval timer IC 140. Examples of configuration and program for this processing circuit will not be explained.

The arc-shorting decision circuit 13 detects a welding voltage value Vₐ in Fig. 3 and, if this value is higher than a predetermined level, generates an arc while if it is lower than the predetermined value, operates for contact shorting. This circuit 13 is easily realized by using a comparator. This process, which is generally used for conventional arc welding machines, will not be described in detail. Also, in place of detecting the welding voltage Vₐ, the arc light may be directly detected.

The dip waveform circuit 16 and the pulse waveform circuit 15, which are also generally configured and operate similarly to corresponding circuits for conventional shorting transfer welding machines and pulse arc welding machines, will not be explained further.

The switching means 17 in Fig. 3 is also easily realizable by a commercially available analog switch IC or the like.

The configuration of the main circuit in Fig. 3 may be used as a primary inverter control system instead of as a secondary chopper system as shown without departing from the spirit of the invention. Further, the microcomputer used in the processing circuit 149 of the dip pulse control circuit 14 may be replaced by another means to set a count with the same effect, or the timers in Fig. 5 which are of such a type as to count the number of reference clock pulses may alternatively of Cr integration type including a capacitor and a resistor. The present invention has been described above.

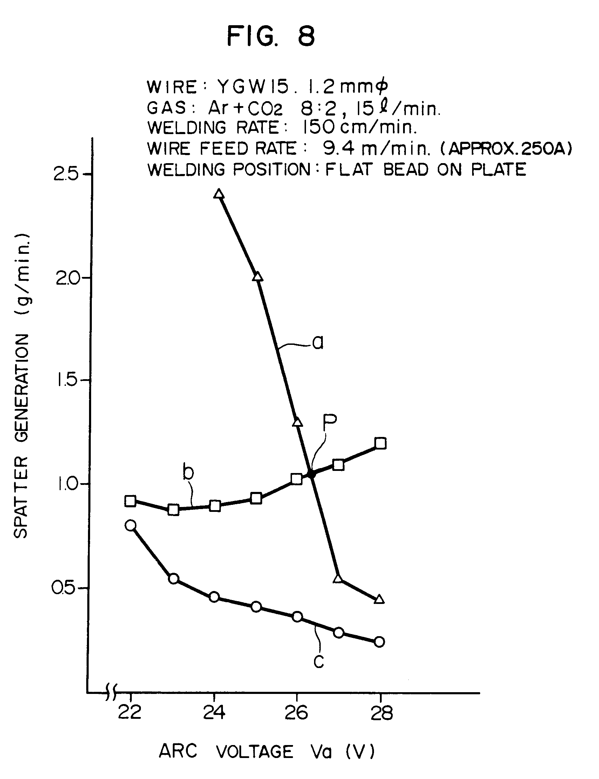

The result of measurement of the spatter generation under different arc voltage values Vₐ in the circuit of Fig. 5 as configured as shown in Fig. 3, as compared with those of a conventional pulse MIG welding machine and a conventional shorting transfer (MIG) welding machine are shown in Fig. 8.

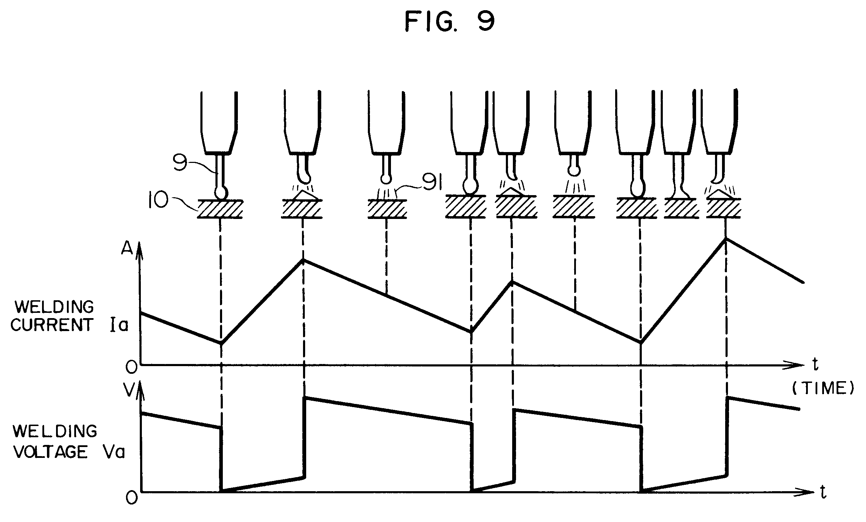

In Fig. 8, character a designates the result of measurement with a conventional MIG welding machine. Character b represents the result of measurement obtained from a conventional shorting transfer (MIG) welding machine for performing the welding process with a welding output waveform as shown in Fig. 9.

As seen from a and b in Fig. 8, the pulse MIG welding machine of non-contact droplet transfer type produces less spatter in a region of high arc voltage value Vₐ, but with the decrease in arc voltage value due to the increase in welding speed or the like, the difference between a and b is reduced to such an extent that under an arc voltage lower than point P, the amount of spatter generated is inverted between the two types of welding machines, so that the MIG welding machine produces less spatter than the pulse MIG welding machine whose spatter generation increases sharply. This is due to the fact that as explained with reference to Fig. 2, the probability of contact shorting is increased thereby to increase the spatter amount upon terminating the contact shorting with a strong pulse current.

Character c in Fig. 8 shows the result of measurement for an arc welding machine according to the present invention. In the region of high arc voltage value Vₐ where contact shorting is less liable to occur, the spatter generation a is only slightly smaller than in conventional pulse arc welding machines. Under high speed welding process in which the arc voltage value Vₐ is reduced to prevent such welding defects as udnercut, however, the probability of contact shorting is increased, thereby reducing the spatter generation much below that of conventional MIG welding machines. This is due to the fact that according to the present invention, proper control means is selected in accordance with the conditions of the weld zone taking into consideration the condition of spray transfer under no contact shorting or that of shorting transfer under contact shorting, and at the same time a molten globule is formed at the forward end of the wire for the next droplet transfer after termination of a contact shorting.

It will thus be understood from the foregoing description that according to the present invention there is provided a pulse MIG welding machine which generates less spatter even in the process of welding with occasional shorting transfer under an arc voltage which is set to a low level at the time of high-speed welding.

## Claims

1. A pulse arc welding machine for use with a consumable electrode (9) to weld a base metal (10), comprising:
judging means (13) for judging wether the electrode (9) is shorted with the base metal (10) or whether the electrode (9) is separated from the base metal (10) to generate an arc (91) therebetween, and for producing an arc-short decision signal (V_{AS});
dip-pulse control means (14) responsive to the arc-short decision signal (V_{AS}) for generating a pulse synchronising signal (Vₜₚ) and for generating a waveform switching signal (V_{F2}) having first and second digital states, the waveform switching signal (V_{F2}) changing from the first digital state to the second digital state if short circuit between the electrode (9) and the base metal (10) has lasted longer than a predetermined first period of time, the waveform switching signal (V_{F2}) remaining in the second digital state until an arc (91) is restored and for a predetermined second period of time thereafter;
pulse waveform means (15) responsive to the pulse synchronizing signal (Vₜₚ) for generating a pulse control signal (Vₚ) which is used for operating the welding machine in a pulse arc welding mode in which the welding current (Iₐ) has a sequence of base-pulse periods and a current pulse and a base current alternate in each base-pulse period, with the pulse control signal (Vₚ) determining the timings of the current pulse and the base current in each base-pulse period, the welding being accomplished by a spray of material from the electrode (9) in the pulse arc welding mode;
dip waveform means (16) responsive to the arc-short decision signal (V_{AS}) for generating a dip control signal (V_{d}) when the arc short decision signal (V_{AS}) indicates that the electrode is shorted to the base metal, the dip control signal (V_{d}) being used for operating the welding machine in a shorting transfer mode in which the welding current (Iₐ) is controlled to follow a first waveform in which the welding current rises at a rate not greater than the rising rate of the current pulse until an arc (91) is reproduced between the electrode (9) and the base metal (10), and to thereafter follow a second waveform during the second period of time, the second waveform being different from both the current pulse and the base current;
welding output control means (4) for controlling the welding current (Iₐ); and
switching means (17) for conveying the pulse control signal (Vₚ) to the welding output control means (4) when the waveform switching signal (V_{F2}) is in the first digital state and for conveying the dip control signal (V_{d}) to the welding output control means (4) when the waveform switching signal (V_{F2}) is in the second digital state.

2. The pulse arc welding machine of claim 1, wherein the consumable electrode (9) is a wire electrode.

3. The pulse arc welding machine of claim 1 or 2, wherein the dip pulse control means (14) comprises first, second, and third timers (141, 142, 143).

4. The pulse arc welding machine of claim 1 or 2, wherein the dip pulse control means (14) comprises means (148) for generating a reference clock signal (V_{CK}), a first IC (140) which receives the reference clock signal and the arc-short decision signal (V_{AS}), the first IC having three timers (141, 142, 143), and a second IC (145) connected to the first IC, the second IC having at least one flip-flop (146, 147).

5. The pulse arc welding machine of claim 1 or 2, wherein the dip pulse control means (14) comprises:
means for generating a reference clock signal (V_{CK}) having levels which change periodically;
first timer means (141), responsive to the reference clock signal (V_{CK}) and the arc-short decision signal (V_{AS}), for measuring the first time period by counting the reference clock signal (V_{CK}) to provide a first period signal (Vₜₚ₁), the first period signal having a low digital state while the first time period is being counted and having a high digital state after the first time period has expired;
second timer means (142), responsive to the reference clock signal (V_{CK}), and the arc-short decision signal (V_{AS}), for measuring the second time period by counting the reference clock signal to provide a second period signal (Vₜₚ₂), the second period signal having low digital state while the second time period is being counted and having a high digital state after the second time period has expired, the second timer means (142) being redrivable while the second time period is being counted;
first flip-flop means (146), responsive to the first period signal (Vₜₚ₁) and the arc-short decision signal (V_{AS}), for generating a first flop-flop signal (V_{F1}) having a low digital value when an arc (91) between the electrode (9) and the base metal (10) is replaced by a short circuit and having a high digital state if the short circuit remains after expiration of the first time period;
second flip-flop means (147), responsive to the first flip-flop signal (V_{F1}) and the second period signal (Vₜₚ₂), for generating the waveform switching signal (V_{F2}); and
third timer means (143), responsive to the waveform switching signal (V_{F2}) and the reference clock signal (V_{CK}), for measuring a base-pulse period by counting the reference clock signal (V_{CK}) when the waveform switching signal (V_{F2}) is in its first digital state, thereby providing said pulse synchronising signal (Vₜₚ) having a low digital state during a predetermined early portion of the respective base-pulse period and having a high digital state during the remaining portion of the respective base-pulse period, and for holding the pulse synchronizing signal (Vₜₚ) in the low digital state when the waveform switching signal (V_{F2}) is in its second digital state.

6. A pulse arc welding method using a consumable electrode (9) to weld a base metal (10), comprising:
selectively supplying a welding current (I) to the electrode (9) and the base metal (10);
sensing the voltage (Vₐ) between the electrode (9) and base metal (10) to generate an arc-short decision signal (V_{AS}) having a first digital value when a short circuit exists between the electrode (9) and the base metal (10) and having a second digital value when an arc (91) exists between the electrode (9) and the base metal (10);
generating a pulse control signal (Vₚ);
generating a dip control signal (V_{d}); and
responsive to the arc-short decision signal, supplying the pulse control signal (Vₚ) for activating the welding current (Iₐ) unless a short has existed between the electrode (9) and the base metal (10) for more than a predetermined period time, and for temporarily supplying the dip control signal (V_{d}) for activating the welding current (Iₐ) if a short has existed between the electrode (9) and the base metal (10) for more than the predetermined period of time.

7. The welding method of claim 6, wherein three different time periods are counted.

## Patentansprüche

1. Impulslichtbogenschweißmaschine zur Verwendung mit einer Abbrandelektrode (9) zum Verschweißen eines Grundmetalles (10), umfassend:
eine Beurteilungseinrichtung (13) zur Beurteilung, ob die Elektrode (9) mit dem Grundmetall (10) kurzgeschlossen ist oder ob die Elektrode (9) von dem Grundmetall (10) getrennt ist, um einen Lichtbogen (91) zwischen diesen zu erzeugen, und zur Erzeugung eines Lichtbogen-Kurzschluß-Entscheidungssignales (V_{AS});
eine Dip-Impulssteuereinrichtung (14), die ansprechend auf das Lichtbogen-Kurzschluß-Entscheidungssignal (V_{AS}) ein Impulssynchronisierungssignal (Vₜₚ) erzeugt und ein Wellenformumschaltsignal (V_{F2}) erzeugt, das einen ersten und einen zweiten digitalen Zustand hat, wobei das Wellenformumschaltsignal (V_{F2}) von dem ersten digitalen Zustand zu dem zweiten digitalen Zustand wechselt, wenn zwischen der Elektrode (9) und dem Grundmetall (10) ein Kurzschluß länger als eine vorbestimmte erste Zeitperiode gedauert hat, wobei das Wellenformumschaltsignal (V_{F2}) in dem zweiten digitalen Zustand verbleibt, bis ein Lichtbogen (91) wiederhergestellt ist und für eine vorbestimmte zweite Zeitperiode anschließend;
eine Impulswellenformeinrichtung (15), die ansprechend auf das Impulssynchronisierungssignal (Vₜₚ) ein Impulssteuersignal (Vₚ) erzeugt, das zum Betrieb der Schweißmaschine in einem Impulslichtbogenschweißmodus verwendet wird, bei dem der Schweißstrom (Iₐ) eine Sequenz von Basis-Impulsperioden hat und ein Stromimpuls und ein Basisstromimpuls in jeder Basisimpulsperiode abwechseln, wobei das Impulssteuersignal (Vₚ) die Zeittakte des Stromimpulses und des Basisstromes in jeder Basisimpulsperiode bestimmt, wobei der Schweißvorgang durch einen Materialsprühnebel von der Elektrode (9) in dem Impulslichtbogenschweißmodus erzielt wird;
eine Dip-Wellenformeinrichtung (16), die ansprechend auf das Lichtbogen-Kurzschluß-Entscheidungssignal (V_{AS}) ein Dip-Steuersignal (V_{d}) erzeugt, wenn das Lichtbogen-Kurzschluß-Entscheidungssignal (V_{AS}) anzeigt, daß die Elektrode mit dem Grundmetall kurzgeschlossen ist, wobei das Dip-Steuersignal (V_{d}) für den Betrieb der Schweißmaschine in einem Kurzschlußtransfermodus verwendet wird, in welchem der Schweißstrom (Iₐ) so gesteuert wird, daß er einer ersten Wellenform folgt, bei welcher der Schweißstrom mit einer Rate ansteigt, die nicht größer ist als die Anstiegsrate des Stromimpulses, bis ein Lichtbogen (91) zwischen der Elektrode (9) und dem Grundmetall (10) wiederhergestellt ist, und um anschließend während der zweiten Zeitperiode einer zweiten Wellenform zu folgen, welche zweite Wellenform sowohl von dem Stromimpuls als auch von dem Basisstrom verschieden ist;
eine Schweißleistungssteuereinrichtung (4) zur Steuerung des Schweißstromes (Iₐ); und
eine Schalteinrichtung (17) zum Übertragen des Impulssteuersignales (Vₚ) zur der Schweißleistungssteuereinrichtung (4), wenn das Wellenformumschaltsignal (V_{F2}) in dem ersten digitalen Zustand ist, und zum Übertragen des Dip-Steuersignales (V_{d}) zu der Schweißleistungssteuereinrichtung (4), wenn das Wellenformumschaltsignal (V_{F2}) in dem zweiten digitalen Zustand ist.

2. Impulslichtbogenschweißmaschine nach Anspruch 1, bei welcher die Abbrandelektrode (9) eine Drahtelektrode ist.

3. Impulslichtbogenschweißmaschine nach Anspruch 1 oder 2, bei welcher die Dip-Impulssteuereinrichtung (14) einen ersten, einen zweiten und einen dritten Zeitgeber (141, 142, 143) enthält.

4. Impulslichtbogenschweißmaschine nach Anspruch 1 oder 2, bei welcher die Dip-Impulssteuereinrichtung (14) Einrichtungen (148) zum Erzeugen eines Referenztaktsignales (V_{CK}), einen ersten IC (140), der das Referenztaktsignal und das Lichtbogen-Kurzschluß-Entscheidungssignal (V_{AS}) empfängt, aufweist, wobei der erste IC drei Zeitgeber (141, 142, 143) hat, und einen zweiten IC (145), der mit dem ersten IC verbunden ist, welcher zweite IC wenigstens einen Flip-Flop (146, 147) hat.

5. Impulslichtbogenschweißmaschine nach Anspruch 1 oder 2, bei welcher die Dip-Impulssteuereinrichtung (14) umfaßt:
eine Einrichtung zum Erzeugen eines Referenztaktsignales (V_{CK}) mit Pegeln, die periodisch wechseln;
eine erste Zeitgebereinrichtung (141), die ansprechend auf das Referenztaktsignal (V_{CK}) und das Lichtbogen-Kurzschluß-Entscheidungssignal (V_{AS}) die erste Zeitperiode durch Zählen des Referenztaktsignales (V_{CK}) mißt, um ein erstes Periodensignal (Vₜₚ₁) zu erzeugen, wobei das erste Periodensignal einen niedrigen digitalen Zustand hat, während die erste Zeitperiode gezählt wird, und einen hohen digitalen Zustand hat, nachdem die erste Zeitperiode geendet hat;
eine zweite Zeitgebereinrichtung (142), die ansprechend auf das Referenztaktsignal (V_{CK}) und das Lichtbogen-Kurzschluß-Entscheidungssignal (V_{AS}) die zweite Zeitperiode durch Zählen des Referenztaktsignales mißt, um ein zweites Periodensignal (Vₜₚ₂) zu erzeugen, welches zweite Periodensignal einen niedrigen digitalen Zustand hat, während die zweite Zeitperiode gezählt wird, und einen hohen digitalen Zustand hat, nachdem die zweite Zeitperiode geendet hat, wobei die zweite Zeitgebereinrichtung (142) erneut ansteuerbar ist, während die zweite Zeitperiode gezählt wird;
eine erste Flip-Flop-Einrichtung (146), die ansprechend auf das erste Periodensignal (Vₜₚ₁) und das Lichtbogen-Kurzschluß-Entscheidungssignal (V_{AS}) ein erstes Flip-Flop-Signal (V_{F1}) erzeugt, das einen niedrigen digitalen Wert hat, wenn ein Lichtbogen (91) zwischen der Elektrode (9) und dem Grundmetall (10) durch einen Kurzschluß ersetzt wird, und einen hohen digitalen Zustand hat, wenn der Kurzschluß nach Beendigung der ersten Zeitperiode andauert;
eine zweite Flip-Flop-Einrichtung (147), die ansprechend auf das erste Flip-Flop-Signal (V_{F1}) und das zweite Periodensignal (Vₜₚ₂) das Wellenformumschaltsignal (V_{F2}) erzeugt; und
eine dritte Zeitgebereinrichtung (143), die ansprechend auf das Wellenformumschaltsignal (V_{F2}) und das Referenztaktsignal (V_{CK}) eine Basisimpulsperiode durch Zählen des Referenztaktsignales (V_{CK}) mißt, wenn das Wellenformumschaltsignal (V_{F2}) in seinem ersten digitalen Zustand ist, und dadurch das Impulssynchronisierungssignal (Vₜₚ) abgibt, das einen niedrigen digitalen Zustand während eines vorbestimmten frühen Abschnittes der jeweiligen Basisimpulsperiode hat und einen hohen digitalen Zustand während des übrigen Abschnittes der jeweiligen Basisimpulsperiode hat, um das Impulssynchronisierungssignal (Vₜₚ) in dem niedrigen digitalen Zustand zu halten, wenn das Wellenformumschaltsignal (V_{F2}) in seinem zweiten digitalen Zustand ist.

6. Impulslichtbogenschweißverfahren unter Verwendung einer Abbrandelektrode (9) zum Verschweißen eines Grundmetalles (10), umfassend:
das selektive Zuführen eines Schweißstromes (I) zu der Elektrode (9) und dem Grundmetall (10);
Erfassen der Spannung (Vₐ) zwischen der Elektrode (9) und dem Grundmetall (10) zur Erzeugung eines Lichtbogen-Kurzschluß-Entscheidungssignales (V_{AS}), das einen ersten digitalen Wert hat, wenn ein Kurzschluß zwischen der Elektrode (9) und dem Grundmetall (10) vorliegt, und einen zweiten digitalen Wert hat, wenn ein Lichtbogen (91) zwischen der Elektrode (9) und dem Grundmetall (10) vorliegt;
Erzeugen eines Impulssteuersignales (Vₚ);
Erzeugen eines Dip-Steuersignales (V_{d}); und
ansprechend auf das Lichtbogen-Kurzschluß-Entscheidungssignal das Zuführen des Impulssteuersignales (Vₚ) zur Aktivierung des Schweißstromes (Iₐ), wenn nicht ein Kurzschluß zwischen der Elektrode (9) und dem Grundmetall (10) länger als eine vorbestimmte Zeitperiode vorhanden war, und zum vorübergehenden Zuführen des Dip-Steuersignales (V_{d}) zur Aktivierung des Schweißstromes (Iₐ), wenn ein Kurzschluß zwischen der Elektrode (9) und dem Grundmetall (10) länger als die vorbestimmte Zeitperiode vorhanden war.

7. Schweißverfahren nach Anspruch 6, bei welchem drei verschiedene Zeitperioden gezählt werden.

## Revendications

1. Machine de soudage à l'arc par impulsions, destinée à être utilisée avec une électrode consommable (9) pour souder un métal de base (10), comprenant
des moyens de jugement (13) pour juger si l'électrode (9) est en court-circuit avec le métal de base (10) ou s'il existe, entre l'électrode (9) et le métal de base (10), une séparation propre à la création d'un arc (91) entre ceux-ci, et pour produire un signal de décision d'arc court (V_{AS}):
des moyens de commande d'impulsion/de bain (14) qui réagissent au signal de décision d'arc court (V_{AS}) en produisant un signal de synchronisation d'impulsion (Vₜₚ) et en produisant un signal de commutation de forme d'onde (V_{F2}) qui présente un premier état logique et un second état logique, le signal de commutation de forme d'onde (V_{F2}) passant du premier état logique au second état logique si un court-circuit entre l'électrode (9) et le métal de base (10) a duré plus longtemps qu'une première période de temps prédéterminée, le signal de commutation de forme d'onde (V_{F2}) restant dans le second état logique jusqu'à ce qu'un arc (91) soit rétabli et pendant une seconde période de temps prédéterminée après cela;
des moyens de mise en forme d'onde d'impulsions (15) qui réagissent au signal de synchronisation d'impulsion (Vₜₚ) en produisant un signal de commande d'impulsion (Vₚ) qui est utilisé pour faire fonctionner la machine de soudage dans un mode de soudage à l'arc par impulsions, dans lequel le courant de soudage (Iₐ) présente une séquence de périodes du courant de base/de récurrence des impulsions et une impulsion de courant alterne avec un courant de base dans chaque période du courant de base/de récurrence des impulsions, le signal de commande d'impulsion (Vₚ) déterminant les positionnements temporels de l'impulsion de courant et du courant de base dans chaque période du courant de base/de récurrence des impulsions, le soudage étant effectué par pulvérisation de fines gouttelettes de matière à partir de l'électrode (9) dans le mode de soudage à l'arc par impulsions;
des moyens de mise en forme d'onde de bain (16) qui réagissent au signal de décision d'arc court (V_{AS}) en produisant un signal de commande de bain (V_{d)} lorsque le signal de décision d'arc court (V_{AS}) indique que l'électrode est en court-circuit avec le métal de base, le signal de commande de bain (V_{d}) étant utilisé pour faire fonctionner la machine de soudage dans un mode de transfert en arc court dans lequel le courant de soudage (Iₐ) est commandé de façon à suivre une première forme d'onde dans laquelle le courant de soudage croît à une vitesse non supérieure à la vitesse de montée de l'impulsion de courant jusqu'à ce qu'un arc (91) soit reproduit entre l'électrode (9) et le métal de base (10), puis à suivre une seconde forme d'onde pendant la seconde période de temps, la seconde forme d'onde étant différente, à la fois de l'impulsion de courant et du courant de base;
des moyens de commande de sortie de soudage (4) pour commander le courant de soudage (Iₐ); et
des moyens de commutation (17) pour acheminer le signal de commande d'impulsion (Vₚ) vers les moyens de commande de sortie de soudage (4) lorsque le signal de commutation de forme d'onde (V_{F2}) est dans le premier état logique et pour acheminer le signal de commande de bain (V_{d}) vers les moyens de commande de sortie de soudage (4) lorsque le signal de commutation de forme d'onde (V_{F2}) est dans le second état logique.

2. Machine de soudage à l'arc par impulsions selon la revendication 1, dans laquelle l'électrode consommable (9) est un fil-électrode.

3. Machine de soudage à l'arc par impulsions selon la revendication 1 ou 2, dans laquelle les moyens de commande d'impulsion/de bain (14) comprennent des première, deuxième et troisième minuteries (141, 142, 143).

4. Machine de soudage à l'arc par impulsions selon la revendication 1 ou 2, dans laquelle les moyens de commande d'impulsion/de bain (14) comprennent des moyens (148) pour produire un signal d'horloge de référence (V_{CK}), un premier circuit intégré (140) qui reçoit le signal d'horloge de référence et le signal de décision d'arc court (V_{AS}), le premier circuit intégré comportant trois minuteries (141, 142, 143), et un second circuit intégré (145) relié au premier circuit intégré, le second circuit intégré comportant au moins une bascule bistable (146, 147).

5. Machine de soudage à l'arc par impulsions selon la revendication 1 ou 2, dans laquelle les moyens de commande d'impulsion/de bain (14) comprennent:
des moyens pour produire un signal d'horloge de référence (V_{CK}) ayant des niveaux qui changent périodiquement;
des premiers moyens formant minuterie(141) qui réagissent au signal d'horloge de référence (V_{CK}) et au signal de décision d'arc court (V_{AS}) en mesurant la première période de temps par comptage du signal d'horloge de référence (V_{CK}) pour fournir un signal de première période (Vₜₚ₁), le signal de première période ayant un état logique bas tandis que la première période de temps est en cours de comptage et ayant un état logique haut après l'expiration de la première période de temps;
des deuxièmes moyens formant minuterie (142) qui réagissent au signal d'horloge de référence (V_{CK}) et au signal de décision d'arc court (V_{AS}) en mesurant la seconde période de temps par comptage du signal d'horloge de référence pour fournir un signal de seconde période (Vₜₚ₂), le signal de seconde période ayant un état logique bas tandis que la seconde période de temps est en cours de comptage et ayant un état logique haut après l'expiration de la seconde période de temps, les deuxièmes moyens formant minuterie (142) pouvant être commandés à nouveau tandis que la seconde période de temps est en cours de comptage;
des premiers moyens formant bascule bistable (146) qui réagissent au signal de première période (Vₜₚ₁) et au signal de décision d'arc court (V_{AS}) en produisant un signal de première bascule bistable (V_{F1}) ayant un état logique bas lorsqu'un arc (91) entre l'électrode (9) et le métal de base (10) est remplacé par un court-circuit et ayant un état logique haut si le court-circuit persiste après l'expiration de la première période de temps;
des seconds moyens formant bascule bistable (147) qui réagissent au signal de première bascule bistable (V_{F1}) et au signal de seconde période (Vₜₚ₂) en produisant le signal de conmutation de forme d'onde (V_{F2}); et
des troisièmes moyens formant minuterie (143) qui réagissent au signal de commutation de forme d'onde (V_{F2}) et au signal d'horloge de référence (V_{CK}) en mesurant une période du courant de base/de récurrence des impulsions par comptage du signal d'horloge de référence (V_{CK}) lorsque le signal de commutation de forme d'onde (V_{F2}) est dans son premier état logique, fournissant ainsi ledit signal de synchronisation d'impulsion (Vₜₚ) qui présente un état logique bas pendant une partie initiale prédéterminée de la période du courant de base/de récurrence des impulsions respective et qui présente un état logique haut pendant la partie restante de la période du courant de base/de récurrence des impulsions respective, et pour maintenir le signal de synchronisation d'impulsion (Vₜₚ) dans l'état logique bas lorsque le signal de commutation de forme d'onde (V_{F2}) est dans son second état logique.

6. Procédé de soudage à l'arc par impulsions, utilisant une électrode consommable (9) pour souder un métal de base (10), comprenant les opérations consistant
à alimenter sélectivement en courant de soudage (I) l'électrode (9) et le métal de base (10);
à détecter la tension (Vₐ) entre l'électrode (9) et le métal de base (10), pour générer un signal de décision d'arc court (V_{AS}) qui a une première valeur logique lorsqu'un court-circuit existe entre l'électrode (9) et le métal de base (10) et qui a une seconde valeur logique lorsqu'un arc (91) existe entre l'électrode (9) et le métal de base (10);
à générer un signal de commande d'impulsion (Vₚ);
à générer un signal de commande de bain (V_{d}); et
en réponse au signal de décision d'arc court, à délivrer le signal de commande d'impulsion (Vₚ) pour activer le courant de soudage (Iₐ), à moins qu'un court-circuit n'ait existé entre l'électrode (9) et le métal de base (10) pendant plus qu'une période de temps prédéterminée, et à délivrer temporairement le signal de commande de bain (V_{d}) pour activer le courant de soudage (Iₐ) si un court-circuit a existé entre l'électrode (9) et le métal de base (10) pendant plus que la période de temps prédéterminée.

7. Procédé de soudage selon la revendication 6, dans lequel trois périodes de temps différentes sont comptées.
